(19) Europäisches Patentamt
European Patent Office
Office européen des brevets

(11) **EP 2 851 851 A1**

(12) **EUROPEAN PATENT APPLICATION**

(43) Date of publication:
**25.03.2015 Bulletin 2015/13**

(51) Int Cl.:
***G06N 7/00*** *(2006.01)*

(21) Application number: **13185409.3**

(22) Date of filing: **20.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Tata Consultancy Services Limited Maharashtra (IN)**

(72) Inventor: **Tyagi, Rahul Lithia, FL Florida 33547 (US)**

(74) Representative: **Tomlinson, Kerry John Dehns St Bride's House 10 Salisbury Square London EC4Y 8JD (GB)**

(54) **A computer implemented tool and method for automating the forecasting process**

(57) A tool (100) and method (200-234) for automating the process of forecasting are disclosed. The tool includes a data collector (10) for collecting data from a plurality of sources. An extractor (12) extracts, from the collected data, the predictor data streams and elements to be used for forecasting. The predictor data streams and elements are analyzed for completeness in analyzer (16) and their corresponding characteristics are determined. Further, the predictor data streams and elements are arranged using clustering module (18) into multiple sets such that each set has a common data pattern. A plurality of forecasting models and the corresponding unique properties and a unique master list of their forecasting parameters, are stored in a second repository (20). The unique properties are compared by comparator (22A) with the properties of each of the forecasting models, and a set of forecasting models suitable for performing a forecast are identified and ranked by ranking module (24). The most appropriate forecasting model is selected and provided to the forecasting engine (28), for forecasting.

FIGURE 1

**Description**

**DEFINITIONS OF TERMS USED IN THIS SPECIFICATION**

The term *'predictor data streams and elements'* in this specification refers to elements and streams of data which give information useful and/or significant for forecasting.

The term *'state space model'* in this specification refers to a model used for representing a system as a set of input, output and state variables related by first-order differential equations.

The term *'shrinkage'* in this specification refers to a phenomenon in which a fitted relationship appears to perform less well on a new data set than on the data set used for fitting, i.e., the value of the coefficient of determination 'shrinks'. The shrinkage refers to the standard adjustment made in the coefficient of determination to compensate for the subjunctive effects of further sampling.

The term *'regression model'* in this specification refers to a model that estimates the relationships and inter-dependencies amongst the variables used in regression analysis.

The term *'historic time series data'* in this specification refers to past data arranged with respect to a specific time period, which aids in forecasting.

The term *'ANOVA'* in this specification refers to Analysis of Variance. Analysis of Variance includes calculating a variance for a particular data element and partitioning the calculated variance into various components attributable to different sources of variation.

The term *'Student's T-test'* in this specification refers to a statistical hypothesis test in which the test follows student's t-distribution if null-hypothesis is supported. It is used to determine if two sets of data are significantly different from one another. A particular **test-statistic** is the to follow a Student's t- distribution when the scaling term to be used in the test statistic is unknown and is replaced by an estimate based on the data sets being analyzed.

The term *'heteroskedasticity'* in this specification refers to a phenomenon that arises when a sub population of a group of elements has different properties than that of the original group. Heteroskedasticity refers to a scenario that occurs when the variant(s) of an error term change through time across a cross section of data.

The term *'Auto Correlation Function (ACF)'* in this specification refers to the correlation between different data elements at different time intervals. Autocorrelation is a relationship between data elements (values) separated from each other by a given time lag. Auto correlation function is a tool used for finding out repeating patterns in data elements.

The term *'null hypothesis'* in this specification refers to a general/default position that all the predictor data streams and elements required for forecasting are present.

The term *'Durbin-Watson Statistic'* in this specification refers to a test statistic used to determine autocorrelation in the prediction errors from a regression analysis.

The term *'Regression Analysis'* in this specification refers to a statistical process for estimating the relationships among variables. Regression analysis is a technique used for modeling and analyzing variables, when the focus is on the relationship between a dependent variable and one or more independent variables. Regression analysis ascertains how the typical value of the dependent variable changes when any one of the independent variables is varied, while the other independent variables are kept constant.

The term *'Co-efficient of variation'* in this specification refers to the normalized measure of dispersion of a probability distribution or frequency distribution. It is also known as the variation coefficient. The coefficient of variation (CV) is defined as the ratio of the standard deviation $\sigma$ to the mean $\mu$:

$$c_v = \frac{\sigma}{\mu}$$

The term **'Chi-square test'** in this specification refers to a statistical hypothesis test in which the sampling distribution of the test statistic is a chi-squared distribution when the null hypothesis is true. A chi-squared distribution with k degrees of freedom is the distribution of a sum of the squares of k independent standard normal random variables.

The term **'Heuristic'** in this specification refers to techniques for problem solving, learning, and discovery, that gives an optimal solution.

The term **'linear regression'** in this specification refers to an approach to modeling the relationship between a scalar dependent variable y and one or more explanatory variables X. The regression technique that makes use of only one variable is called simple linear regression. The regression technique that makes use of more than one variable is termed multiple linear regression.

The term *'k-means clustering technique'* in this specification refers to a method of cluster analysis which aims to partition 'n' observations into 'k' clusters in which each observation belongs to the cluster with the nearest mean.

The term *'forecast bias'* in this specification refers to the consistent differences between actual outcomes and previously generated forecasts of those outcomes.

The term *'forecast error'* in this specification refers to the difference between the actual /real value and the forecasted value of a time series data. A forecast is compared with an outcome at a single time-point and a summary of forecast errors is constructed over a collection of such time-points.

The term **'Kohonen SOM based clustering technique'** in this specification refers to a clustering and data visualization technique whose aim is to find a set of centroids and to assign each object in a data set to the centroid that provides the best approximation of that object.

The term **'causal information'** in this specification refers to the information that identifies a relationship between various causals. The causal information reflects the relationship between a set of factors and a phenomenon, wherein the phenomenon is a resultant of the set of factors. The causal information is used to improve decision making and to make inferences about the future events.

## BACKGROUND

Forecasting has become an important part of modern life. However, forecasting accuracy continues to be low in most industries. It is apparent that lack of forecasting accuracy manifests for instance, into higher inventory costs. The lack of accuracy of the forecasting process directly affects the retail industry and the Consumer Packaged Goods (CPG) industry that often operate on thin margins. Hitherto, the forecasting process has been a laborious manual process of gathering generalized historical data on an ad-hoc basis and manually building a forecasting model based on the gathered elements to provide imperfect projections that are neither reliable nor accurate in the sense that the projections are susceptible to change with change in consumer behavior or market conditions. Given the significant effort and specialized skills required to build effective forecast models, organizations tend to rely on simple assumptions to develop forecasts that in turn reduce the efficacy of the entire forecasting process.

To address the problems associated with the manual forecasting process, Common off the Shelf (COTS) supply chain forecasting tools were introduced. Even though these tools make the task of forecasting manageable and efficient to a certain extent, these tools also suffer from the following, among other lacunae. The robustness and longevity of a forecasting model is dependent on the meticulousness and the diligence used in developing the forecasting model (parameters and their respective values). However, given the millions of items that need to be forecasted, broad rules of thumb and simple heuristics are used during package implementations to meet the need for a timely implementation of the forecasting model. Such simplifications often tend to compromise the accuracy of the forecast. Tools base their forecast on broad thumb rules while implementing forecast models which in turn impacts the efficiency of the overall forecasting process.

Every organization would have certain unique and non-standard forecasting requirements that a common forecasting model cannot efficiently cater to. Some of the unique and non-standard forecasting requirements warrant an in depth understanding of the underlying problem and the corresponding solution, and the hitherto known forecasting tools which are typically generic and inflexible in nature cannot address the unique and non-standard forecasting requirements of an organization.

Further, in the case of large sized organizations, a large number of forecasting models are created by the existing forecasting tools. Given the volume of the forecasting models created, it is impossible to effectively manage all the generated forecasting models and therefore the accuracy of the forecasting is compromised in the absence of a proper tool not only for model creation but for error diagnostics. Therefore, in view of the drawbacks in the tools of the prior art, there is felt the need for a tool that:

- completely automates the forecasting process and eliminates human intervention;
- is cost effective;
- provides consistent and accurate forecast for multiple scenarios; and
- provides for accurate identification of the exceptions/errors involved in the forecasting process;

## OBJECTS

Some of the objects of the present disclosure, which at least one embodiment herein satisfies, are as follows:

It is an object of the present disclosure to ameliorate one or more problems of the prior art or to at least provide a useful alternative.

An object of the present disclosure is to provide a tool that provides consistent and accurate forecast for multiple scenarios.

Yet another object of the present disclosure is to provide a tool that accurately identifies the exceptions/errors involved in the forecasting process.

Still a further object of the present disclosure is to provide a tool that completely automates the forecasting process and thereby reduces human intervention.

Yet another object of the present disclosure is to provide a tool that assists in bringing down the safety stock level of a product/service, by accurately forecasting all possible scenarios.

Yet another object of the present disclosure is to provide a tool that offers automatic error diagnosis and automatic error correction.

Another object of the present disclosure is to provide a tool that is highly scalable and that can be implemented across a variety of industries.

Yet another object of the present disclosure is to provide a tool that produces consistent forecasts without any maintenance/intervention from the user.

Still a further object of the present disclosure is to provide a tool that makes use of not only the historic data but also the other relevant data including causal information trend indicators and external factors including macroeconomic factors, market related factors and social media related factors to arrive at an optimal forecast.

Still a further object of the present disclosure is to provide a tool that iteratively checks for the completeness of predictor data streams and elements to ensure that all the predictor data streams and elements required to generate an accurate forecast are present.

Yet another object of the present disclosure is to provide a tool that takes into consideration macroeconomic factors including changes in the 'GDP' (Gross Domestic Product), in addition to the historical data streams, to arrive at an accurate forecast.

Still a further object of the present disclosure is to provide a tool that is capable of analyzing structural characteristics of time-series data and is capable of using pattern recognition techniques, to classify demand behavior and automatically determine the best forecasting technique and the corresponding forecasting model.

Another object of the present disclosure is to provide a tool that is flexible to adapt to new and emerging forecasting scenarios.

## SUMMARY

The present disclosure envisages a computer implemented tool for automating the forecasting process. The tool, in accordance with the present disclosure comprises:

- a data collector configured to collect data from a plurality of sources including historic time series data, causal information and trend indicators, the data collector further configured to collect data corresponding to external factors including macroeconomic factors, market related factors and social media related factors;
- an extractor configured to extract, from the collected data, the predictor data streams and elements to be utilized for forecasting;
- a first repository configured to store the extracted predictor data streams and elements;
- a first analyzer adapted to receive the predictor data streams and elements from the repository, the first analyzer configured to analyze the predictor data streams and elements, and determine the characteristics of the predictor data streams and elements, the analyzer further configured to determine iteratively, in accordance with pre-determined rules, whether all predictor data streams and elements required for forecasting are present, and create sets of predictor data streams and elements which are appropriate for forecasting;
- a clustering module provided with a set of clustering and pattern recognition rules, the clustering module configured to receive sets of appropriate predictor data streams and elements analyzed by the analyzer, and group the predictor data streams and elements into a plurality of clusters in accordance with the set of clustering rules such that each cluster contains appropriate predictor data streams and elements having a common data pattern, the clustering module further adapted to extract the characteristic(s) corresponding to each cluster;
- a second repository storing a plurality of forecasting models and the corresponding unique properties and a unique master list of their forecasting parameters, for each of the plurality of forecasting models;
- a classifier provided with a set of classifying rules, the classifier configured to receive the properties of each of the forecasting models and the extracted characteristics of predictor data streams and elements present in each of the clusters, the classifier further having a comparator configured to compare the characteristics with the properties and identify a set of forecasting models containing at least one appropriate forecasting model adapted to perform a forecast using the predictor data streams and elements;
- a ranking module provided with a set of ranking rules and configured to receive the set of forecasting models, the ranking module having a ranking processor adapted to process the received set of models in accordance with the set of ranking rules and thereby rank the set of forecasting models, in accordance with their ability to match with the characteristics of the predictor data elements and data streams;
- a selection module configured to receive the set of ranked forecasting models and select a ranked forecasting model;
- a forecasting engine configured to receive the selected ranked forecasting model and the master list of its forecasting parameters, the forecasting engine further comprising:

■ a value determinator adapted to receive the forecasting parameters of the selected forecasting model;
■ a second analyzer cooperating with the value determinator and configured to apply shrinkage based techniques to eliminate inter-dependent predictor variables, in the event that the selected forecasting model is a regression model, the second analyzer further configured to apply state-space modeling to automate the determination of optimal parameter values, in the event that the selected forecasting model is an exponential smoothing model, the second analyzer configured to automatically select an appropriate set of forecasting parameters and corresponding optimal parameter values; and
■ a processor configured to process the appropriate set of forecasting parameters and the corresponding optimal parameter values in accordance with the selected forecasting model, to generate a forecast.

In accordance with the present disclosure, the tool further includes a self-correcting error diagnosing module, the error diagnosing module comprising:

- a first identifier configured to identify at least one forecast error criteria for the selected forecasting model and calculate the forecast error based on a subset of the forecast error criteria;
- a third analyzer configured to analyze the forecast bias and forecast error pattern corresponding to the forecast error criteria and determine their characteristics;
- a linker configured to identify the properties of the forecast error criteria including the forecast bias and forecast error pattern, the linker having access to the forecasting parameters corresponding to the selected forecasting model, the linker further configured to link the forecast error criteria with the forecasting parameters based on the properties of the forecast error criteria, the linker further configured to identify a set of potential error causing parameters;
- a simulator adapted to receive the set of potential error causing parameters and configured to vary the values of each of the error causing parameters within a pre-determined range to achieve forecast error attenuation, the simulator further configured to identify the sequence in which the values of each of the error causing parameters should be modified, based on the sensitivity of the error causing parameters and the impact on the stability of the selected forecasting model;
- a third repository adapted to store a plurality of forecast error scenarios wherein each error scenario is defined by its corresponding unique error characteristics, the third repository further adapted to receive from the simulator and store the error causing parameters modified by the simulator for a selected forecasting model, the third repository further adapted to store a map between the modified error causing parameters and the respective forecast error scenarios, the computer implemented tool including a mapper adapted to perform the mapping;
- an error correction engine configured to receive the forecast error scenarios from the third repository, the error correction engine further configured to evaluate the received forecast error scenarios and match each of the received forecast error scenarios with the modified error causing parameters stored in the third repository and identify the modified error causing parameters that bring about the occurrence of each of the forecast error scenarios, the error correction engine further configured to define a heuristic that relates the unique characteristics of each of the forecast error scenarios with the modified error causing parameters of the selected forecasting model, the error correction engine further configured to suggest optimal values for the parameters which provide for the most consistent error reduction, for a received forecast error scenario.

In accordance with the present disclosure, the characteristics corresponding to the predictor data streams and elements are selected from the group of characteristics consisting of trend related characteristics, season related characteristics and cycle related characteristics.

In accordance with the present disclosure, the clustering and pattern recognition rules are selected from the group consisting of at least k-means clustering technique, Kohonen SOM based clustering technique, and hierarchical techniques.

In accordance with the present disclosure, the first analyzer is configured to iteratively analyze the data streams and elements using a rule selected form the group of rules consisting of co-efficient of variation analysis rules, curvi-linear regression rules, rules for combination of first order derivatives and higher order of derivatives and auto-correlation function rules.

In accordance with the present disclosure, the ranking module is further configured to assign a weighted rank to each of the forecasting models present within the set of forecasting models.

The present disclosure envisages a computer implemented method for automating the process of forecasting. The method in accordance with the present disclosure comprises the following steps:

- collecting data from a plurality of sources including historic time series data, causal information and trend indicators and collecting data corresponding to external factors including macroeconomic factors, market related factors and social media related factors;

- extracting, from the collected data, the predictor data streams and elements to be used for forecasting;
- storing the extracted predictor data streams and elements in a first repository;
- receiving the predictor data streams and elements from the repository and analyzing the received predictor data streams and elements to identify the characteristics of the predictor data streams and elements;
- iteratively determining whether all the predictor data streams and elements required for forecasting are present;
- creating sets of predictor data streams and elements appropriate for forecasting from the predictor data streams and elements by selecting, combining and transforming one or more predictor data streams and elements;
- receiving sets of predictor data streams and elements and grouping the predictor data streams and elements into a plurality of clusters, in accordance with clustering rules such that each cluster contains predictor data streams and elements having a common data pattern;
- extracting the characteristic(s) corresponding to each cluster;
- storing a plurality of forecasting models and the corresponding unique properties and a unique master list of their forecasting parameters, for each of the plurality of forecasting models;
- receiving the properties of each of the forecasting models and the extracted characteristics of predictor data streams and elements present in each of the clusters;
- comparing the characteristics with the properties and identifying a set of forecasting models containing at least one appropriate forecasting model adapted to perform a forecast using the predictor data streams and elements;
- processing the set of forecasting models in accordance with a set of ranking rules and ranking the set of forecasting models, in accordance with its ability to match with the characteristics of the predictor data elements and data streams;
- selecting a ranked forecasting model; and
- receiving, at a forecasting engine, the selected forecasting model and the master list of its forecasting parameters;
- applying shrinkage based techniques to eliminate inter-dependent predictor variables, in the event that the selected forecasting model is a regression model, and applying state-space modeling to automate the determination of optimal parameter values, in the event that the selected forecasting model is an exponential smoothing model;
- automatically select an appropriate set of forecasting parameters and corresponding optimal parameter values;
- processing the appropriate set of forecasting parameters and the corresponding optimal parameter values in accordance with the selected forecasting model, to generate a forecast; and
- diagnosing the generated forecast and identifying at least one forecast error criteria corresponding to the generated forecast.

In accordance with the present disclosure, the step of diagnosing the generated forecast and identifying at least one forecast error criteria corresponding to the generated forecast further includes the following steps:

- identifying at least one forecast error criteria for the selected forecasting model and calculating the forecast error based on a subset of the forecast error criteria;
- analyzing the forecast bias and forecast error pattern corresponding to the forecast error criteria and determining their characteristics;
- linking the forecast bias and the forecast error pattern of the forecast error criteria with the forecasting parameters of the selected forecasting model, based on the properties of the forecast error criteria, and identifying a set of potential error causing parameters;
- receiving at a simulator, the set of potential error causing parameters and varying the values of each of the error causing parameters within a pre-determined range leading to attenuation of forecast error;
- storing, in a third repository, a plurality of forecast error scenarios wherein each of the error scenarios are defined by unique error characteristics;
- storing the modified error causing forecasting parameters of each of the forecasting models, that are likely causes of the forecast error scenarios, and storing a mapping between the error causing forecasting parameters and the forecast error scenarios;
- receiving at an error correction engine, the forecast error scenarios and evaluating the received forecast error scenarios and matching the received forecast error scenarios with the modified error causing parameters stored in the third repository; and
- identifying the modified error causing parameters that give rise to each of the forecast error scenarios and defining a heuristic that relates the corresponding forecast error scenario characteristics to the modified error causing parameters and automatically suggesting the optimal values corresponding to the parameters, which provide for the most consistent error reduction for a received forecast error scenario.

In accordance with the present disclosure, the step of ranking further includes the step of assigning weights to the individual properties of each of the forecasting models, and calculating a weighted score for each of the forecasting models.

In accordance with the present disclosure, the step of varying the values of each of the error causing parameters further includes the following steps:

- defining the rules for selecting values for respective error causing parameters that provide for consistent error reduction; and
- Identifying, based on the sensitivity of the forecasting parameters and the impact on the stability of the selected forecast model, the sequence in which the values are to be modified.

**BRIEF DESCRIPTION OF THE ACCOMPANYING DRAWINGS**

The computer implemented tool and method for automating the process of forecasting will now be described with reference to the non-limiting, accompanying drawings, in which:

**FIGURE 1** illustrates a block-diagram of the tool for automating the process of forecasting, in accordance with the present disclosure;

**FIGURE 1A** is a block-diagram illustrating the functioning of the data collector, in accordance with the present disclosure;

**FIGURE 2** and **FIGURE 3** illustrate a flowchart depicting the steps involved in the method for automating the process of forecasting, in accordance with the present disclosure;

**FIGURE 4** is a flowchart illustrating the steps involved in collecting data from a plurality of sources including historic time series data, causal information and trend indicators; and

**FIGURE 5** is a flowchart illustrating the steps involved in step of diagnosing the generated forecast and identifying at least one forecast error criteria corresponding to the generated forecast.

**DETAILED DESCRIPTION**

The computer implemented method and tool for automating the process of forecasting will now be described with reference to the accompanying drawings which do not limit the scope and the ambit of the disclosure. The description provided is purely by the way of illustration.

Several granted patents/patent application publications including US6032125, US7584116, US20020169657, US20090157533, US20100138264 and US20120095608 attempt to overcome the shortcomings associated with the conventional COTS tools. However, the aforementioned patents/patent application publications fail to disclose a tool that has the ability to analyze structural characteristics of the time-series data along with the trend indicators and the causal information, and make use of pattern recognition techniques to classify the behavior and use the structural characteristics and the behavior to automatically determine the best forecasting model.

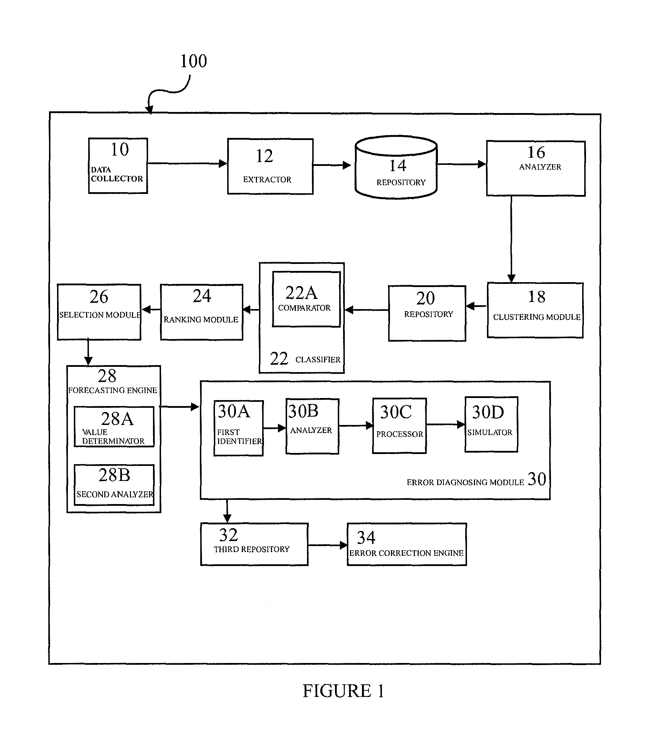

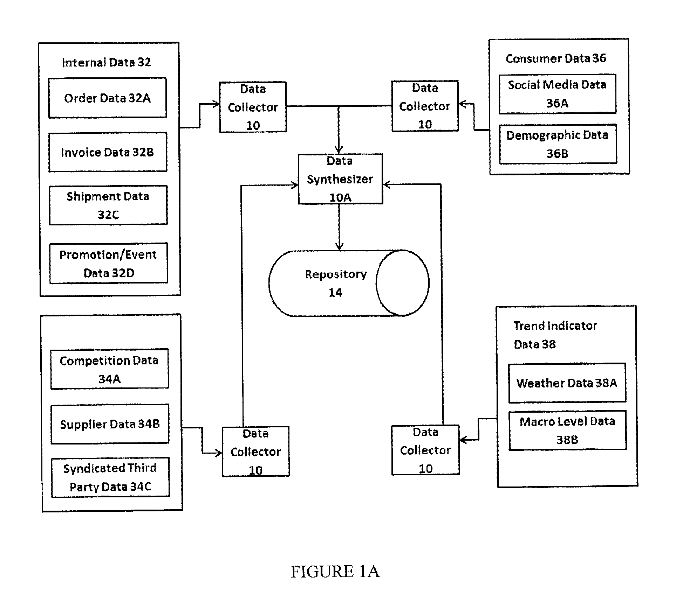

To overcome the disadvantages associated with the prior art COTS tools, the present disclosure envisages a computer-implemented tool and method for automating the process of forecasting. Referring to the accompanying drawings, **FIGURE 1** illustrates a block diagram of the tool **100** for automating the process of forecasting. The tool **100** includes a data collector **10** configured to collect data from a plurality of diversified sources including historic time series data, causal information and trend indicators. The data collected by the data collector **10** includes the historic time series data which are deemed to have an impact on the process of forecasting. The data sources from where the data is collected by the data collector **10** include traditional resources such as store POS (Point of Sales) terminals, supply chain data, and the like. The causal information (including external and internal) collected by the data collector **10** includes the information corresponding to at least the activities performed by relevant industries/competitors. For example, the causal information can include the information that a competitor has slashed the prices of his product/service by 50% or that a competitor has provided a 'buy one get one free' offer on some of his products/services.

**FIGURE 1A** of the accompanying drawings is a block diagram illustrating the working of the data collector **10**. As shown in **FIGURE 1A,** the data to be collected by the data collector **10** includes internal data **32** (including the order data **32A**, invoice data **32B**, shipment data **32C** and the promotion/event related data **32D),** competition data **34A,** supplier data **34B,** and syndicated 3rd party data **34C,** consumer data **36** (including social media data **36A** and demographic data **36B)** and trend indicator data **38** (including weather data **38A** and macroeconomic data **38B).** The aforementioned data items are automatically collected by the data collector **10**. The data collector further includes a data synthesizer **10A** configured to synthesize the data collated by the data collector **10**. The data synthesizer **10A** combines the data obtained from various sources into a plurality of predictor data streams and elements. Further, the data synthesizer **10A** modifies the predictor data streams and elements, if necessary, in order to meet the forecasting requirements. Further, the data synthesizer **10A** optionally combines the predictor data streams and elements with one another, thereby resulting in a combined predictor data stream. The predictor data streams and elements can also be optionally modulated by the data synthesizer **10A**, i.e., an externally defined predictor data stream can be laid on top of an existing predictor data stream. The modulation indices i.e., the indices of the predictor data streams and elements that need modulation/fine tuning are identified for each external data stream and are synthesized with respect to the existing predictor data stream, either additively or multiplicatively.

Referring back to **FIGURE 1,** the tool **100** further includes the extractor **12** which cooperates with the data collector **10** to receive the data collected by the data collector **10**. The extractor **12** is configured to extract the predictor data streams and elements from the data collected by the data collector **10**. The predictor data streams and elements extracted by the extractor **12** are utilized for the purpose of forecasting.

The tool **100** further includes a first repository denoted by the reference numeral **14**. The repository **14** receives the predictor data streams and elements extracted by the extractor **12,** and stores them for further analysis. The tool **100** further includes a first analyzer denoted by the reference numeral **16** configured to receive the predictor data streams and elements from the repository **14**. The analyzer **16** analyzes the received predictor data streams and elements and determines the characteristics of the received predictor data streams and elements. Further, the analyzer **16** also performs an analysis for data completeness to ensure that all the predictor data streams and elements that are required for an accurate forecast are present. The analyzer **16** ensures that the collected predictor data streams and elements (individually and in combination) are taken through the forecasting modeling process, and further determines whether the collected predictor data streams and elements provide for least forecast error. The combination of predictor data streams and elements that provide the least forecast error are considered to be complete. Further, in case of regression models, data completeness is established by ensuring that all the independent causal factors are used in the process of model development. Thus, data completeness is determined by using shrinkage regression techniques to obtain the most appropriate set of causals. Further, the first analyzer **16** creates a plurality of groups (sets), with each group containing a plurality of predictor data streams and elements. The sets of predictor data streams and elements contain the data which is to be used for the purpose of forecasting. Prior to creating the predictor data sets, the first analyzer **16** structurally analyzes the predictor data streams and elements by performing a plurality of tests to establish the structural characteristics of the predictor data streams and elements (also referred to as predictor variables). The statistical tests performed on the predictor data streams and elements include are governed by testing algorithms such as CoV (Co-efficient of variation) tests, curvi-linear regression rules, rules for the combination of first order derivatives and higher order derivatives, and auto correlation function (ACF). The aim of performing statistical tests is to identify the structural characteristics of the predictor data streams and elements.

The tool **100** further includes a clustering module **18** having access to a set of clustering and pattern recognition rules. The clustering module **18** cooperates with the first analyzer **16** to receive the sets of predictor data streams and elements, and recognizes the patterns in respect of the received predictor data streams and elements, using pattern recognition techniques and/or clustering techniques and further groups the sets of predictor data streams and elements, in accordance with the set of clustering & pattern recognition rules, into a plurality of clusters such that every cluster contains only those predictor data streams and elements that have a common data pattern. The clustering module **18** implements a set of clustering and pattern recognition rules including but not restricted to k-means clustering rules, hierarchical techniques and Kohonen SOM based clustering rules, to classify the predictor data streams and elements into a plurality of clusters. The clustering module **18** further extracts, from the clusters, the characteristics that are common to the predictor data streams and elements present in each cluster. The characteristics include structural properties like seasonality, i.e., the number of seasons, duration of each season, seasonal indicia to define the shape of the season, continuous intermittent/monotonous trends, cyclicity including cycle time and cycle duration corresponding to each of the clusters. In the case of complex patterns, the characteristic recognition may be recursive and the recognition may be performed on smaller sets of data using the method of ANOVA (Analysis of variance) and a combination of first and higher order derivatives.

The tool **100** further includes a second repository denoted by the reference numeral **20** which is configured to store a plurality of forecasting models, the unique properties corresponding to each of the forecasting models and a unique master list listing the forecasting parameters corresponding to each of the plurality of forecasting models.

The tool **100** further includes a classifier **22** having access to a set of classifying rules. The classifier **22,** in accordance with the present disclosure receives the properties corresponding to each of the forecasting models stored in the second repository **20**. These properties are elucidated on the basis of which of the models is able to support various time series data patterns. These data patterns include patterns such as a constant data pattern, where the predictor data streams and elements are at a constant level, a trended data pattern where the predictor data streams and elements reveal a particular trend, a seasonal data pattern where the predictor data streams and elements exhibit seasonality, for example, shifting seasons and seasons of various strengths, auto-correlated patterns, where the predictor data streams and elements are separated by certain units of time and cyclical data pattern where predictor data streams and elements repeat after specific time intervals. Thereafter the classifier **22** also explores to elicit detailed characteristics of the forecasting models. The detailed characteristics include trend identification (the different mechanisms that the model offers for identifying trended time-series data, the different types of trended patterns supported: linear, non-linear, trend integration into forecast: additive or multiplicative, automated or manual), season identification (the different mechanisms that the model offers for identifying trended time-series data, identification mechanisms of various characteristics of the season like frequency, duration, strength, shape), cycle identification (cycle time, identification of data patterns that are cyclical, integration of cyclicity into forecast), auto-correlation (identification of lag of auto-correlation, identification of degree of auto-correlation and identification of pattern of auto-correlation), demand decomposition based on causal information (mechanisms to attribute part or whole of demand to a set of active demand-impacting causal information, determination of specification bias: residual auto-correlation, heteroskedasticity determination, removal of specification bias using step-wise regression or Bayesian shrinkage), forecast modulation based on imposition of a provided overlay pattern (overlaying an externally defined data pattern on top of a forecast or predictor data pattern and defining modulation indices for each external pattern and synthesizing with the forecast/predictor data streams and elements, additively/multiplicatively), multiple predictor data stream collation (combining multiple, independent predictor data streams into one and using the same as the combined predictor data stream for prediction. The combined predictor data streams are generated by normalizing the predictor data streams and then allowing a weighted combination of a selected set of predictor data streams).

The classifier **22** further cooperates with the clustering module **18** to receive the characteristic(s) of predictor data streams and elements present in each of the clusters. The classifier **22** further includes a comparator **22A** configured to compare the (common) characteristics of the predictor data streams and elements present in every cluster with the properties corresponding to each of the forecasting models stored in the second repository **20**. Subsequent to the comparison of the characteristics of predictor data streams and elements and the properties of each of the clustering models, the comparator **22A** identifies a set of forecasting models, wherein the set includes at least one forecasting model whose properties are similar to the characteristics of a particular cluster of predictor data streams and elements. The classifier **22,** in accordance with the present disclosure identifies a set of forecasting models based on the closeness between the properties of each of the forecasting models and the (common) characteristics of the predictor data streams and elements stored in the respective clusters.

The tool **100** further includes a ranking module **24** having access to a set of ranking rules and configured to receive the set of forecasting models from the classifier **22**. The ranking module **24** also receives the characteristics common to the predictor data streams and elements of each cluster, and the properties corresponding to each of the forecasting models. The ranking module **24** matches the characteristics of the predictor data streams and elements with the properties of each of the forecasting models to identify a commonality between the two. Further, based on the closeness between the properties of respective forecasting models and the common characteristics of the predictor data streams and elements stored in the respective clusters, a weight will be assigned to each of the properties of the respective forecasting models. It is within the scope of the present disclosure that a particular forecasting model can have different weights for different sets of predictor data streams and elements.

Depending upon the commonality between the properties of each of the forecasting models and the common characteristics of the predictor data streams and elements stored in the respective clusters, the ranking module **24** ranks each of the forecasting models. Typically, each of the forecasting models are assigned a score (match rank) based on the match (closeness) between the properties of respective forecasting models and the common characteristics of the predictor data streams and elements stored in the respective clusters. For example, the forecasting model having the properties that are exactly similar to the common characteristics of a particular cluster of predictor data streams and elements is assigned a score (rank) '1' and the forecasting model having the properties that are entirely dissimilar to the common characteristics of a particular cluster of predictor data streams and elements is assigned a score (rank) '5', in a scenario where five forecasting algorithms are under consideration.

The tool **100** further includes a selection module denoted by the reference numeral **26** which receives the set of ranked forecasting models and selects the forecasting model with a match rank, typically the highest rank, i.e., the forecasting model which has been assigned the rank '1'. However, it is within the scope of the present disclosure to select a forecasting model with a much lower rank, i.e., rank '2' or rank '3'.

The tool **100** further includes a forecasting engine denoted by the reference numeral **28** which receives the forecasting model selected by the selection module **26** along with the master list of forecasting parameters corresponding to the selected forecast model, from the repository **14.** The value determinator **28A** selects a particular forecasting parameter and varies its value within a pre-determined range while keeping the values of all the other forecasting parameters constant, in order to determine the inter dependency between the parameters corresponding to the selected forecasting model. Based on the inter-dependency between the forecasting parameters and the sensitivity of each of the forecasting parameters, an appropriate value can be chosen for each of the forecasting parameters of the selected forecasting model. Intervals with low-sensitivity can be eliminated in order to make the sensitivity range more limited.

The forecasting engine **28** further includes a second analyzer denoted by the reference numeral **28B** which receives the forecasting parameters of the selected forecasting model. The second analyzer **28B** makes use of state space modeling framework to automate the determination of optimal parameter values. This is based upon the OKS framework for model automation. In case of regression models, the second analyzer **28B** makes use of shrinkage-based techniques to eliminate inter-dependent predictor variables. The second analyzer **28B** is configured to choose, a set of appropriate forecasting parameters and the corresponding values that suit the characteristics of the predictor data streams and elements. The forecasting engine **28** further includes a processor **28C** which is configured to process the appropriate set of forecasting parameters and the corresponding optimal parameter values in accordance with the selected forecasting model, to generate a forecast.

The tool in accordance with the present disclosure includes a self-correcting error diagnosing module denoted by the reference numeral **30**. The error diagnosing module **30** includes a first identifier **30A** configured to identify at least one forecast error criteria for the selected forecasting model and calculate the forecast error based on a subset of the forecast error criteria. The error diagnosing module **30** further includes a third analyzer **30B** configured to identify the various properties or characteristics associated with the forecast error by analyzing the forecast bias and the forecast error pattern corresponding to the forecast error criteria.

The forecast bias is analyzed as follows: The various properties of forecast bias including the magnitude, variance and the pattern of the bias are identified and analyzed. The time-phased change in the aforementioned properties is utilized to diagnose the potential cause of the forecast error. For example, if the forecast picks up a seasonal pattern even before the season starts, it will have a leading bias. On the contrary, if the forecast picks the seasonal pattern after the season has already started, then it would have a lagged bias.

Similarly, the forecast error pattern is determined. These patterns may be monotonous, random or repeated. A monotonous pattern is one which increases or decreases at the same rate over time. The existence of monotonous pattern is determined by performing a linear regression of error with time. A random pattern is one where there is no specific pattern. The random pattern is determined by using the least squares technique over time. A repeated pattern is one which is marked by error values that display either a monotonous or random pattern for certain periods of time but display a unique and different pattern for certain pre-determined time periods. The actual error pattern for the time period in question will be determined by using auto-regressive techniques and examining the co-efficients.

The error diagnosing module **30** further includes a linker **30C** configured to identify the properties and characteristics of the forecast error criteria, including the forecast bias and the forecast error pattern. The linker **30C** cooperates with the second repository **20** to receive the forecasting parameters corresponding to the selected forecast model. The linker **30C** links the forecast error criteria (including the forecast bias and the forecast error pattern) with the forecasting parameters of the selected forecasting model. In accordance with the present disclosure, such a linking takes place based on the properties of the forecast error criteria. The linker **30C** further identifies a set of potential error causing parameters, based on the linkage between the forecast error criteria and the forecasting parameters of the selected forecasting model.

The error diagnosing module **30** further includes a simulator **30D** configured to receive the set of potential error causing parameters and vary the values corresponding to each of the potential error causing parameters over the entire set of error causing parameters. The simulator **30D** varies the values corresponding to the potential error causing forecasting parameters in a direction that attenuates the forecast error and identifies the values that bring about a consistent reduction in the occurrence of the forecast error. The simulator **30D** is further configured to identify the sequence in which the values of each of the error causing parameters should be altered/modified. In accordance with the present disclosure, such an identification of the sequence takes place based on the sensitivity of each of the error causing parameters and also based on the impact caused by the error causing parameters, on the stability of the selected forecasting model. The simulator further includes a selector (not shown in figures) configured to define rules (heuristics) for selecting values for respective error causing parameters that give the most consistent error reduction.

The tool **100** further includes a third repository **32** adapted to store a plurality of forecast error scenarios wherein each error scenario is defined by its corresponding unique error characteristics. The repository **32** is further adapted to receive from the simulator **30D** and store the error causing parameters modified by the simulator for a selected forecasting model. The third repository **32** is further adapted to store a map between the modified error causing parameters and the respective forecast error scenarios.

The tool **100**, in accordance with the present disclosure includes a mapper (not shown in the figures) that generates a map between the modified error causing parameters corresponding to the selected forecasting algorithm and the forecast error scenarios stored in the repository **32**. The map between the modified error causing parameters corresponding to the selected forecasting algorithm and the respective forecast error scenarios are stored in the repository **32**.

The tool **100**, in accordance with the present disclosure includes an error correction engine **34** configured to receive the forecast error scenarios from the third repository **32**. The error correction engine **34** is further configured to evaluate the received forecast error scenarios and match each of the received forecast error scenarios with the modified error causing parameters stored in the third repository **32** and identify the modified error causing parameters that bring about the occurrence of each of the forecasting scenarios.

The error correction engine **34** is further configured to define a heuristic that relates the unique characteristics of each of the forecast error scenarios with the modified (by the simulator **30D)** error causing parameters of the selected forecasting model. The error correction engine suggests optimal values for the parameters which provide for the most consistent error reduction, in respect of a received forecast error scenario.

The forecasting engine **34** ensures that any pre-defined error scenarios are automatically addressed by making the required changes to the forecasting model being used. If there are new error scenarios, the steps discussed above will be executed and the model components causing the error would be identified and their values replaced.

Therefore, in accordance with the present disclosure, the forecasting tool selects and uses a forecasting model in an automated fashion based on structural analysis and application of pattern recognition techniques on the predictor data streams and elements. At the same time, the tool is able to auto-correct the model being used, based on forecast error diagnostics that are parsed into changes of the error causing parameters through machine learning.

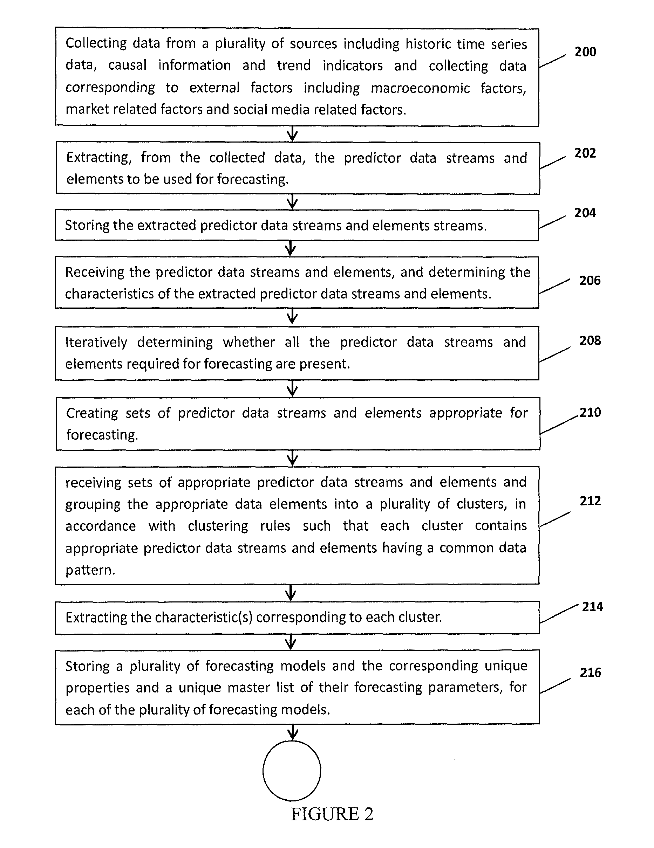

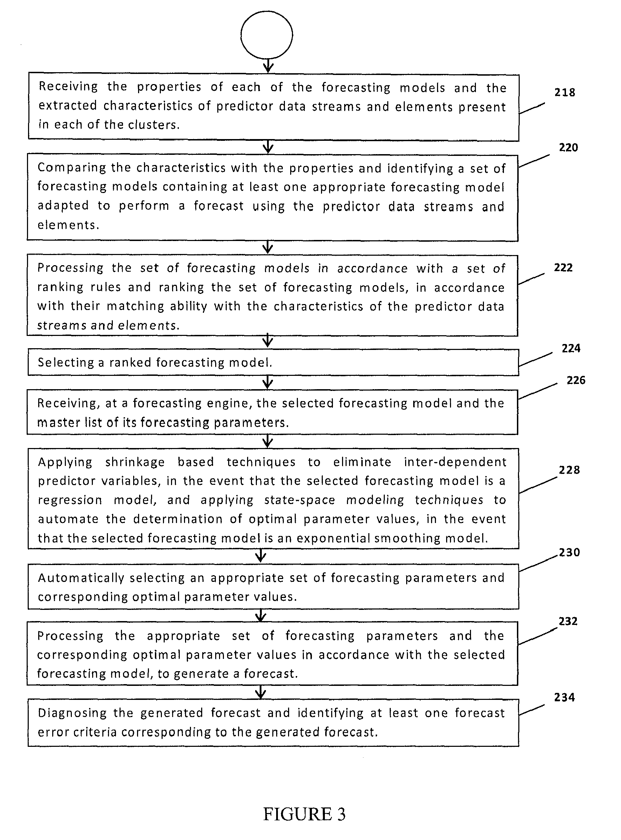

Referring to **FIGURE 2** and **FIGURE 3,** there is shown a flow chart detailing the steps involved in the computer implemented method for automating the process of forecasting. The method, in accordance with the present disclosure includes the following steps:

- collecting data from a plurality of sources including historic time series data, causal information and trend indicators and collecting data corresponding to external factors including macroeconomic factors, market related factors and social media related factors **200;**
- extracting, from the collected data, the predictor data streams and elements to be used for forecasting **202;**
- storing the extracted predictor data streams and elements in a first repository **204;**
- receiving the predictor data streams and elements from the repository and analyzing the received predictor data streams and elements to identify the characteristics of the predictor data streams and elements **206;**
- iteratively determining whether all the predictor data streams and elements required for forecasting are present **208;**
- creating sets of predictor data streams and elements appropriate for forecasting from the predictor data streams and elements by selecting, combining and transforming one or more predictor data streams and elements **210;**
- receiving sets of predictor data streams and elements and grouping the predictor data streams and elements into a plurality of clusters, in accordance with clustering rules such that each cluster contains predictor data streams and elements having a common data pattern **212;**
- extracting the characteristic(s) corresponding to each cluster **214;**
- storing a plurality of forecasting models and the corresponding unique properties and a unique master list of their forecasting parameters, for each of the plurality of forecasting models **216;**
- receiving the properties of each of the forecasting models and the extracted characteristics of predictor data streams and elements present in each of the clusters **218;**
- comparing the characteristics with the properties and identifying a set of forecasting models containing at least one appropriate forecasting model adapted to perform a forecast using the predictor data streams and elements **220;**
- processing the set of forecasting models in accordance with a set of ranking rules and ranking the set of forecasting models, in accordance with its ability to match with the characteristics of the predictor data elements and data streams **222;**
- selecting a ranked forecasting model **224;** and
- receiving, at a forecasting engine, the selected forecasting model and the master list of its forecasting parameters **226;**
- applying shrinkage based techniques to eliminate inter-dependent predictor variables, in the event that the selected forecasting model is a regression model, and applying state-space modeling to automate the determination of optimal parameter values, in the event that the selected forecasting model is an exponential smoothing model **228;**
- automatically select an appropriate set of forecasting parameters and corresponding optimal parameter values **230;**
- processing the appropriate set of forecasting parameters and the corresponding optimal parameter values in accordance with the selected forecasting model, to generate a forecast **232;** and
- diagnosing the generated forecast and identifying at least one forecast error criteria corresponding to the generated forecast **234.**

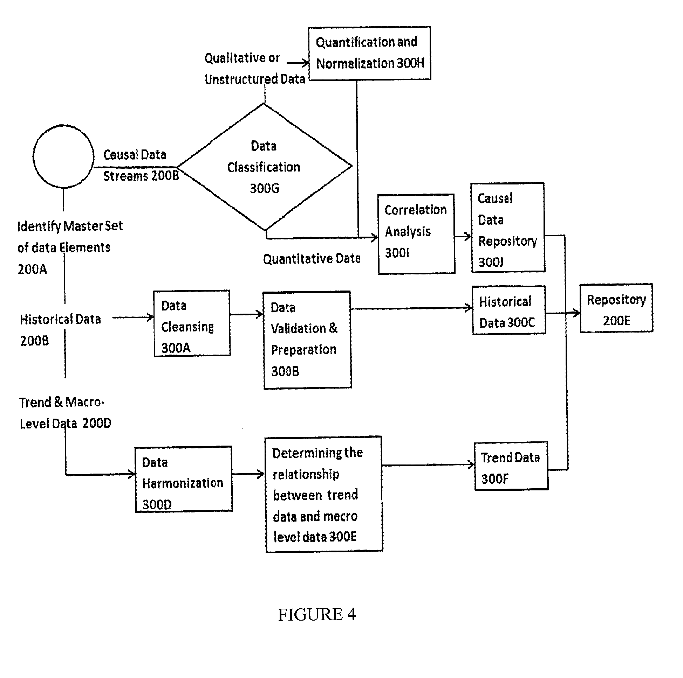

Referring to **FIGURE 4,** there is shown a flow chart further elaborating the step **(200** of **FIGURE** 1) of collecting data from a plurality of sources including historic time series data, causal information and trend indicators. In accordance with **FIGURE 4,** the step of collecting data from a plurality of sources including historic time series data, causal information and trend indicators, further includes the following steps:

- identifying master set of data streams to be utilized for forecasting **200A;**
- receiving causal data streams from a plurality of data sources **200B;**

- receiving at least the historical data and the demand data from a plurality of sources **200C;**
- receiving at least the trend data and the macro-level data from a plurality of sources **200D; and**
- processing the received data and storing the processed data in a repository **200E.**

In accordance with **FIGURE 4,** the step **200C** further includes the following steps:

- cleansing the historical data **300A;**
- validating the historical data and validating the collated historical data **300B;** and
- obtaining a historical data set including the validated historical data **300C.**

In accordance with **FIGURE 4,** the step **200D** further includes the following steps:

- harmonizing the received trend data and macro-level data **300D;**
- determining the relationship between the trend data and macro-level data **300E;**
- obtaining a trend and economic factor data set **300F.**

In accordance with **FIGURE 4,** the step **200B** further includes the following steps:

- classifying the received causal information into qualitative data and quantitative data **300G;**
- quantifying the qualitative data and normalizing the qualitative data **300H;**
- correlating the qualitative data and the quantitative data **300I;** and
- storing the correlated data in a causal data repository **300J.**

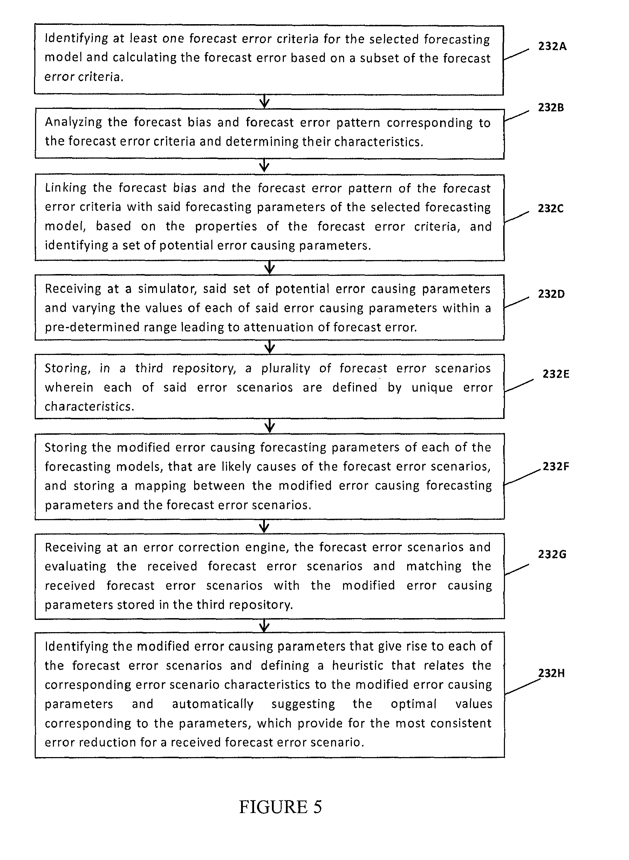

Referring to **FIGURE 5** of the accompanying drawings, there is shown a flowchart illustrating the steps involved in the step of diagnosing the generated forecast and identifying at least one forecast error criteria corresponding to the generated forecast:

- identifying at least one forecast error criteria for the selected forecasting model and calculating the forecast error based on a subset of the forecast error criteria **232A;**
- analyzing the forecast bias and forecast error pattern corresponding to the forecast error criteria and determining their characteristics **232B;**
- linking the forecast bias and the forecast error pattern of the forecast error criteria with the forecasting parameters of the selected forecasting model, based on the properties of the forecast error criteria, and identifying a set of potential error causing parameters **232C;**
- receiving at a simulator, the set of potential error causing parameters and varying the values of each of the error causing parameters within a pre-determined range leading to attenuation of forecast error **232D;**
- storing, in a third repository, a plurality of forecast error scenarios wherein each of the error scenarios are defined by unique error characteristics **232E;**
- storing the modified error causing forecasting parameters of each of the forecasting models, that are likely causes of the forecast error scenarios, and storing a mapping between the modified error causing forecasting parameters and the forecast error scenarios **232F;**
- receiving at an error correction engine, the forecast error scenarios and evaluating the received forecast error scenarios and matching the received forecast error scenarios with the modified error causing parameters stored in the third repository **232G;** and
- identifying the modified error causing parameters that give rise to each of the forecast error scenarios and defining a heuristic that relates the corresponding forecast error scenario characteristics to the modified error causing parameters and automatically suggesting the optimal values corresponding to the parameters, which provide for the most consistent error reduction for a received forecast error scenario **232H.**

The tool envisaged by the present disclosure provides for pattern recognition, through which the data patterns underlying the raw data are ascertained. Further the raw data (raw data streams) are clustered into a plurality of groups. Further the tool provides for determination of defining characteristics of the each of the clusters. Using a clustering approach not only simplifies the process of data manipulation but also simplifies the process of creating a forecast model. The tool envisaged by the present disclosure provides for creation/identification of a forecasting model that best suits a particular data cluster. For a plurality of data clusters, forecast models that best suit the characteristics of each of the respective data clusters can be identified/created.

To exemplify the forecasting scenario considering a real-world scenario, let us assume the number of categories of products/services/goods to be '150'. The number of Stock Keeping Units (SKUs) present in every category could be '50,000'. The number of locations at which the categories of products/services/goods are present could be '1000'. Therefore, the number of SKUs and the number of locations put together would be '50,000,000'. The number of forecast planners working for an organization could be, for example, '50' and the forecasts are calculated, for example, once a week. If the number corresponding to the SKU/location combination, i.e., '50,000,000' were to be distributed amongst the available planners, every planner would have to generate/analyze the forecasts corresponding to '1,000,000' SKU/location combination, every week. Given the fact that every forecaster has to handle '1,000,000' scenarios every week, the non-availability of formatted data (clustered data) not only makes the task of forecasting cumbersome, but also renders the process of forecasting less accurate and less effective. The **Table 1** provided herein below exemplifies how the availability of clustered data brings about a reduction in the Mean Absolute Percentage Error (MAPE) associated with the forecasting process, thereby providing for the generation of an accurate and effective forecast.

**TABLE 1: Forecast Accuracy Analysis**

| Week | P 52.2010 | P 53.2010 | P 01.2011 | P 02.2011 | P 03.2011 |
|---|---|---|---|---|---|
| Average MAPE (Clustered Items) | 0.07204 | 0.3898863 | 0.435481481 | 0.284625 | 0.180770833 |
| Average MAPE (Items without Clustering) | 0.04 | 0.4090909 | 0.518518519 | 0.45833333 | 0.458333333 |

As is evident from the aforementioned **Table 1,** the use of clustered data elements significantly reduces the average MAPE associated with the forecasting process. Reduction in MAPE/per week also reduces the MAPE associated with the entire process of forecasting, over an extended period of time.

## TECHNICAL ADVANTAGES

The technical advantages of the present disclosure include realization of a tool and method for forecasting. The tool proposed by the present disclosure provides consistently accurate forecasts corresponding to multiple scenarios. The proposed tool provides for exception-based management wherein the forecast scenarios having error(s) will be identified as exceptions, based on a pre-determined criteria. The proposed tool includes the computational knowledge (intelligence) to identify an optimal forecast model, based on the pattern of the historic time series data, the causal information and the trend indicators. The proposed tool is also capable of building an error diagnosis & automatic error correction model that eliminates human intervention in the process of forecasting.

The proposed tool provides for forecasting as a managed service, thereby allowing the forecasting process to be controlled and managed by a dedicated platform, thereby enhancing the accuracy and the efficiency associated with the forecasting process. The proposed tool makes the task of supply chain management less cumbersome, by providing for efficient and effective management of the forecasting process. The proposed tool accurately identifies the errors involved in the generated forecast and dynamically adjusts the corresponding forecasting model in order to optimize the forecast and reduce the occurrence of forecast errors. The solution proposed by this tool can be utilized across a variety of domains including retail industry, consumer package goods (CPG) industry, and consumer electronics industry.

The proposed tool completely automates the process of forecasting, thereby obviating the need for human intervention. The proposed tool also provides for a reduction in the safety stock levels/inventory levels, by providing accurate forecasts of multiple scenarios.

The embodiments herein and the various features and advantageous details thereof are explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the invention to achieve one or more of the desired objects or results.

Any discussion of documents, acts, materials, devices, articles or the like that has been included in this specification is solely for the purpose of providing a context for the invention. It is not to be taken as an admission that any or all of these matters form part of the prior art base or were common general knowledge in the field relevant to the invention as it existed anywhere before the priority date of this application.

**Claims**

1. A computer implemented tool for automating the forecasting process, said tool comprising:

    • a data collector configured to collect data from a plurality of sources including historic time series data, causal information and trend indicators, said data collector further configured to collect data corresponding to external factors including macroeconomic factors, market related factors and social media related factors;
    • an extractor configured to extract, from said collected data, the predictor data streams and elements to be utilized for forecasting;
    • a first repository configured to store the extracted predictor data streams and elements;

**said system being characterized by:**

    • a first analyzer adapted to receive said predictor data streams and elements from said repository, said first analyzer configured to analyze said predictor data streams and elements, and determine the characteristics of said predictor data streams and elements, said analyzer further configured to determine iteratively, in accordance with pre-determined rules, whether all predictor data streams and elements required for forecasting are present, and create sets of predictor data streams and elements which are appropriate for forecasting;
    • a clustering module provided with a set of clustering and pattern recognition rules, said clustering module configured to receive sets of appropriate predictor data streams and elements analyzed by said analyzer, and group said predictor data streams and elements into a plurality of clusters in accordance with said set of clustering rules such that each cluster contains appropriate predictor data streams and elements having a common data pattern, said clustering module further adapted to extract the characteristic(s) corresponding to each cluster;
    • a second repository storing a plurality of forecasting models and the corresponding unique properties and a unique master list of their forecasting parameters, for each of the plurality of forecasting models;
    • a classifier provided with a set of classifying rules, said classifier configured to receive said properties of each of said forecasting models and the extracted characteristics of predictor data streams and elements present in each of said clusters, said classifier further having a comparator configured to compare said characteristics with said properties and identify a set of forecasting models containing at least one appropriate forecasting model adapted to perform a forecast using said predictor data streams and elements;
    • a ranking module provided with a set of ranking rules and configured to receive said set of forecasting models, said ranking module having a ranking processor adapted to process the received set of models in accordance with said set of ranking rules and thereby rank the set of forecasting models, in accordance with their ability to match with the characteristics of the predictor data elements and data streams;
    • a selection module configured to receive said set of ranked forecasting models and select a ranked forecasting model;
    • a forecasting engine configured to receive the selected ranked forecasting model and the master list of its forecasting parameters, said forecasting engine further comprising:

        ■ a value determinator adapted to receive said forecasting parameters of the selected forecasting model;
        ■ a second analyzer cooperating with said value determinator and configured to apply shrinkage based techniques to eliminate inter-dependent predictor variables, in the event that the selected forecasting model is a regression model, said second analyzer further configured to apply state-space modeling to automate the determination of optimal parameter values, in the event that the selected forecasting model is an exponential smoothing model, said second analyzer configured to automatically select an appropriate set of forecasting parameters and corresponding optimal parameter values; and
        ■ a processor configured to process said appropriate set of forecasting parameters and the corresponding optimal parameter values in accordance with the selected forecasting model, to generate a forecast.

2. The tool as claimed in claim 1, wherein said tool further includes a self-correcting error diagnosing module, said error diagnosing module comprising:

    • a first identifier configured to identify at least one forecast error criteria for the selected forecasting model and calculate the forecast error based on a subset of the forecast error criteria;
    • a third analyzer configured to analyze the forecast bias and forecast error pattern corresponding to the forecast error criteria and determine their characteristics;
    • a linker configured to identify the properties of the forecast error criteria including the forecast bias and forecast error pattern, said linker having access to the forecasting parameters corresponding to the selected forecasting model, said linker further configured to link said forecast error criteria with said forecasting parameters based on the properties of said forecast error criteria, said linker further configured to identify a set of potential error causing parameters;

• a simulator adapted to receive said set of potential error causing parameters and configured to vary the values of each of said error causing parameters within a pre-determined range to achieve forecast error attenuation, said simulator further configured to identify the sequence in which the values of each of the error causing parameters should be modified, based on the sensitivity of said error causing parameters and the impact on the stability of the selected forecast model;

• a third repository adapted to store a plurality of forecast error scenarios wherein each error scenario is defined by its corresponding unique error characteristics, the third repository further adapted to receive from the simulator and store the error causing parameters modified by said simulator for a selected forecasting model, the third repository further adapted to store a map between the modified error causing parameters and the respective forecast error scenarios, the computer implemented tool including a mapper adapted to perform the mapping;

• an error correction engine configured to receive said forecast error scenarios from said third repository, the error correction engine further configured to evaluate the received forecast error scenarios and match each of the received forecast error scenarios with the modified error causing parameters stored in the third repository and identify the modified error causing parameters that bring about the occurrence of each of the forecasting scenarios, the error correction engine further configured to define a heuristic that relates the unique characteristics of each of said forecast error scenarios with the modified error causing parameters of the selected forecasting model, the error correction engine further configured to suggest optimal values for the parameters which provide for the most consistent error reduction, for a received forecast error scenario.

**3.** The tool as claimed in claim 1 or 2, wherein the characteristics corresponding to the predictor data streams and elements are selected from the group of characteristics consisting of trend related characteristics, season related characteristics and cycle related characteristics.

**4.** The tool as claimed in claim 1, 2 or 3, wherein said clustering and pattern recognition rules are selected from the group consisting of at least k-means clustering technique, Kohonen SOM based clustering technique, and hierarchical techniques.

**5.** The tool as claimed in claim 1, 2, 3 or 4, wherein said first analyzer is configured to iteratively analyze said data streams and elements using a rule selected form the group of rules consisting of co-efficient of variation analysis rules, curvi-linear regression rules, rules for combination of first order derivatives and higher order of derivatives and auto-correlation function rules.

**6.** The tool as claimed in any preceding claim, wherein said ranking module is further configured to assign a weighted rank to each of the forecasting models present within said set of forecasting models.

**7.** A computer implemented method for automating the process of forecasting, said method comprising the following steps:

• collecting data from a plurality of sources including historic time series data, causal information and trend indicators and collecting data corresponding to external factors including macroeconomic factors, market related factors and social media related factors;

• extracting, from the collected data, the predictor data streams and elements to be used for forecasting;

• storing the extracted predictor data streams and elements in a first repository;

**said method being characterized by:**

• receiving said predictor data streams and elements from said repository and analyzing the received predictor data streams and elements to identify the characteristics of said predictor data streams and elements;

• iteratively determining whether all the predictor data streams and elements required for forecasting are present;

• creating sets of predictor data streams and elements appropriate for forecasting from said predictor data streams and elements by selecting, combining and transforming one or more predictor data streams and elements;

• receiving sets of predictor data streams and elements and grouping the predictor data streams and elements into a plurality of clusters, in accordance with clustering rules such that each cluster contains predictor data streams and elements having a common data pattern;

- extracting said characteristic(s) corresponding to each cluster;
- storing a plurality of forecasting models and the corresponding unique properties and a unique master list of their forecasting parameters, for each of the plurality of forecasting models;
- receiving the properties of each of said forecasting models and the extracted characteristics of predictor data streams and elements present in each of said clusters;
- comparing said characteristics with said properties and identifying a set of forecasting models containing at least one appropriate forecasting model adapted to perform a forecast using said predictor data streams and elements;
- processing the set of forecasting models in accordance with a set of ranking rules and ranking the set of forecasting models, in accordance with its ability to match with the characteristics of the predictor data elements and data streams;
- selecting a ranked forecasting model; and
- receiving, at a forecasting engine, the selected forecasting model and the master list of its forecasting parameters;
- applying shrinkage based techniques to eliminate inter-dependent predictor variables, in the event that the selected forecasting model is a regression model, and applying state-space modeling to automate the determination of optimal parameter values, in the event that the selected forecasting model is an exponential smoothing model;
- automatically select an appropriate set of forecasting parameters and corresponding optimal parameter values;
- processing said appropriate set of forecasting parameters and the corresponding optimal parameter values in accordance with the selected forecasting model, to generate a forecast; and
- diagnosing the generated forecast and identifying at least one forecast error criteria corresponding to the generated forecast.

8. The method as claimed in claim 7, wherein the step of ranking further includes the step of assigning weights to the individual properties of each of the forecasting models, and calculating a weighted score for each of the forecasting models.

9. The method as claimed in claim 7 or 8, wherein the step of diagnosing the generated forecast and identifying at least one forecast error criteria corresponding to the generated forecast, further includes the following steps:

- identifying at least one forecast error criteria for the selected forecasting model and calculating the forecast error based on a subset of the forecast error criteria;
- analyzing the forecast bias and forecast error pattern corresponding to the forecast error criteria and determining their characteristics;
- linking the forecast bias and the forecast error pattern of the forecast error criteria with said forecasting parameters of the selected forecasting model, based on the properties of the forecast error criteria, and identifying a set of potential error causing parameters;
- receiving at a simulator, said set of potential error causing parameters and varying the values of each of said error causing parameters within a pre-determined range leading to attenuation of forecast error;
- storing, in a third repository, a plurality of forecast error scenarios wherein each of said error scenarios are defined by unique error characteristics;
- storing the modified error causing forecasting parameters of each of the forecasting models, that are likely causes of said forecast error scenarios, and storing a mapping between said modified error causing forecasting parameters and the forecast error scenarios;
- receiving at an error correction engine, the forecast error scenarios and evaluating the received forecast error scenarios and matching the received forecast error scenarios with the modified error causing parameters stored in the third repository; and
- identifying the modified error causing parameters that give rise to each of the forecast error scenarios and defining a heuristic that relates the corresponding forecast error scenario characteristics to the modified error causing parameters and automatically suggesting the optimal values corresponding to the parameters, which provide for the most consistent error reduction for a received forecast error scenario.

10. The method as claimed in claim 9, wherein the step of varying the values of each of said error causing parameters further includes the following steps:

- defining the rules for selecting values for respective error causing parameters that provide for consistent error reduction; and

• Identifying, based on the sensitivity of the forecasting parameters and the impact on the stability of the selected forecast model, the sequence in which said values are to be modified.

FIGURE 1

FIGURE 1A

Collecting data from a plurality of sources including historic time series data, causal information and trend indicators and collecting data corresponding to external factors including macroeconomic factors, market related factors and social media related factors. — 200

↓

Extracting, from the collected data, the predictor data streams and elements to be used for forecasting. — 202

↓

Storing the extracted predictor data streams and elements streams. — 204

↓

Receiving the predictor data streams and elements, and determining the characteristics of the extracted predictor data streams and elements. — 206

↓

Iteratively determining whether all the predictor data streams and elements required for forecasting are present. — 208

↓

Creating sets of predictor data streams and elements appropriate for forecasting. — 210

↓

receiving sets of appropriate predictor data streams and elements and grouping the appropriate data elements into a plurality of clusters, in accordance with clustering rules such that each cluster contains appropriate predictor data streams and elements having a common data pattern. — 212

↓

Extracting the characteristic(s) corresponding to each cluster. — 214

↓

Storing a plurality of forecasting models and the corresponding unique properties and a unique master list of their forecasting parameters, for each of the plurality of forecasting models. — 216

↓

○

FIGURE 2

Receiving the properties of each of the forecasting models and the extracted characteristics of predictor data streams and elements present in each of the clusters.

*218*

Comparing the characteristics with the properties and identifying a set of forecasting models containing at least one appropriate forecasting model adapted to perform a forecast using the predictor data streams and elements.

*220*

Processing the set of forecasting models in accordance with a set of ranking rules and ranking the set of forecasting models, in accordance with their matching ability with the characteristics of the predictor data streams and elements.

*222*

Selecting a ranked forecasting model.

*224*

Receiving, at a forecasting engine, the selected forecasting model and the master list of its forecasting parameters.

*226*

Applying shrinkage based techniques to eliminate inter-dependent predictor variables, in the event that the selected forecasting model is a regression model, and applying state-space modeling techniques to automate the determination of optimal parameter values, in the event that the selected forecasting model is an exponential smoothing model.

*228*

Automatically selecting an appropriate set of forecasting parameters and corresponding optimal parameter values.

*230*

Processing the appropriate set of forecasting parameters and the corresponding optimal parameter values in accordance with the selected forecasting model, to generate a forecast.

*232*

Diagnosing the generated forecast and identifying at least one forecast error criteria corresponding to the generated forecast.

*234*

FIGURE 3

FIGURE 4

Identifying at least one forecast error criteria for the selected forecasting model and calculating the forecast error based on a subset of the forecast error criteria.

232A

Analyzing the forecast bias and forecast error pattern corresponding to the forecast error criteria and determining their characteristics.

232B

Linking the forecast bias and the forecast error pattern of the forecast error criteria with said forecasting parameters of the selected forecasting model, based on the properties of the forecast error criteria, and identifying a set of potential error causing parameters.

232C

Receiving at a simulator, said set of potential error causing parameters and varying the values of each of said error causing parameters within a pre-determined range leading to attenuation of forecast error.

232D

Storing, in a third repository, a plurality of forecast error scenarios wherein each of said error scenarios are defined by unique error characteristics.

232E

Storing the modified error causing forecasting parameters of each of the forecasting models, that are likely causes of the forecast error scenarios, and storing a mapping between the modified error causing forecasting parameters and the forecast error scenarios.

232F

Receiving at an error correction engine, the forecast error scenarios and evaluating the received forecast error scenarios and matching the received forecast error scenarios with the modified error causing parameters stored in the third repository.

232G

Identifying the modified error causing parameters that give rise to each of the forecast error scenarios and defining a heuristic that relates the corresponding error scenario characteristics to the modified error causing parameters and automatically suggesting the optimal values corresponding to the parameters, which provide for the most consistent error reduction for a received forecast error scenario.

232H

FIGURE 5

Europäisches
Patentamt

European
Patent Office

Office européen
des brevets

## EUROPEAN SEARCH REPORT

**Application Number**

EP 13 18 5409

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/319310 A1 (LITTLE MARK ROLAND [US]) 24 December 2009 (2009-12-24) * the whole document * | 1-10 | INV. G06N7/00 |
| X | US 2012/310939 A1 (LEE TAIYEONG [US] ET AL) 6 December 2012 (2012-12-06) * abstract * * figure 1 * | 1-10 | |
| X | WO 02/37376 A1 (MANUGISTICS INC [US]) 10 May 2002 (2002-05-10) * abstract * | 1-10 | |
| X | US 2004/088211 A1 (KAKOUROS STEVE [FR] ET AL) 6 May 2004 (2004-05-06) * abstract * * figure 1 * | 1-10 | |
| A | Rob J Hyndman ET AL: "A state space framework for automatic forecasting using exponential smoothing methods a , b a a", International Journal of Forecasting, 31 December 2002 (2002-12-31), pages 439-454, XP055099690, Retrieved from the Internet: URL:http://www.forecasters.org/pdfs/ijf/HKSG.pdf [retrieved on 2014-01-31] * abstract * | 1-10 | **TECHNICAL FIELDS SEARCHED (IPC)** G06N |
| A | ROBERT TIBSHIRANI: "Regression shrinkage and selection via the lasso: a retrospective", PLOS COMPUTATIONAL BIOLOGY, vol. 73, no. 3, 30 June 2011 (2011-06-30), pages 273-282, XP055040090, ISSN: 1369-7412, DOI: 10.1111/j.1467-9868.2011.00771.x * abstract * | 1-10 | |

The present search report has been drawn up for all claims

| Place of search | Date of completion of the search | Examiner |
|---|---|---|
| The Hague | 31 January 2014 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 18 5409

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2014

| Patent document cited in search report | Publication date | Patent family member(s) | | Publication date |
|---|---|---|---|---|
| US 2009319310 A1 | 24-12-2009 | NONE | | |
| US 2012310939 A1 | 06-12-2012 | NONE | | |
| WO 0237376 A1 | 10-05-2002 | AU | 1466602 A | 15-05-2002 |
| | | EP | 1350199 A1 | 08-10-2003 |
| | | TW | 581955 B | 01-04-2004 |
| | | US | 2002169657 A1 | 14-11-2002 |
| | | WO | 0237376 A1 | 10-05-2002 |
| US 2004088211 A1 | 06-05-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6032125 A
- US 7584116 B
- US 20020169657 A
- US 20090157533 A
- US 20100138264 A
- US 20120095608 A